# EUROPEAN PATENT APPLICATION

(11) **EP 2 407 294 A1**
(43) Date of publication of application: **18.01.2012**
(21) Application number: 09841432.9
(22) Date of filing: 25.12.2009
(51) Int. Cl.: B29C 33/72, C08K 5/00, C08L 101/00, C11D 3/37, C11D 3/40

(54) **RESIN COMPOSITION FOR CLEANING OF RESIN MOLDING MACHINES**

(30) Priority: 10.03.2009 JP 2009056245
(71) Applicant: Daicel Polymer Ltd., Tokyo 108-8230 (JP)
(72) Inventor: WAKITA, Naoki, Himeji-shi Hyogo 671-1123 (JP)
(74) Representative: Grünecker, Kinkeldey, Stockmair & Schwanhäusser
(86) International application number: PCT/JP2009/007219
(87) International publication number: WO 2010/103601

(57) **Abstract**

The present invention presents a resin composition for cleaning a plastics-processing machine, containing a tracer substance and a thermoplastic resins, wherewith the plastics-processing machine is cleaned. After the plastics-processing machinefinishing with processing ofa resin is cleaned with the resin composition, the resin composition remaining in the processing machine is discharged with a subsequent resin. The residue of the said resin composition is checked by detecting fluorescence on the surface of a molding after the molding containing the subsequent resin is obtained in the discharging process of the said resin composition remaining in the processing machine.

## Description

### Technical Field

The present invention relates to a resin composition for cleaning a plastics-processing machine and to a method of cleaning a plastics-processing machine with the said resin composition.

### Background art

Thermoplastic resins are widely used as injection moldings, extrudates, films, and so on. There is a growing trend in the plastics articles to be manufactured in various kinds and in small productions, thus the frequency of material changes is getting higher and it is getting more important than before in a view of quality control to clean inside of the processing machines when materials are changed. It is well known in processing of thermoplastic resins to apply purging agents as a way of cleaning processing machines when the materials are changed.

The cleaning method with purging agents also has a problem that the purging agents can remain in the processing machines, although the purging agents have ability to discharge the preceding materials.

It is usually done to extrude a subsequent resin to discharge the purging agent when the purging agent remains in the machine, however, it is difficult to judgewhen the discharging is finished, it takes long time and needs much material to switch to the subsequent resin.

JP-A 10-289287 and Japanese Patent No.3836302 disclose inventions utilizing fluorescent materials, however, these inventions are in an absolutely different technical fields from the purging agents for plastics-processing machines.

### Disclosure of the Invention

The present invention has a purpose to present a resin composition, wherewith, when a plastics-processing machine is cleaned with the resin composition and then the resin composition is discharged with a subsequent resin, it becomes easier to judge when the discharging of the resin composition is finished and thus the amount of the resin to discharge the resin composition can be reduced or defects due to the remaining resin composition in the processing machine can be reduced.

Another purpose of the present invention is to provide a method of cleaning plastics-processing machines with the said resin composition.

The present invention provides, as a means of solving the problems, a resin composition for cleaning a plastics-processing machine, comprising a thermoplastic resin and a tracer substance, wherein the said tracer substance fluoresces and functions as an indicator of checking a residue of the thermoplastic resin in the plastics-processing machine after cleaning the plastics-processing machines.

The present invention provides, as means of solving the other problem, a method of cleaning a plastics-processing machine by applying the thermoplastic resin composition claimed in any one of claims 1 to 3, including two processes: a process of cleaning the plastics-processing machine with the said resin composition after processing a resin and a process of discharging the said resin composition remaining in the processing machine after the cleaning by extruding a subsequent resin, wherein the residue of the thermoplastic resin composition in a molding of the subsequent resin can be detected in the discharging process by checking fluorescence on the surface of the molding.

### Effects of the Invention

By purging a plastics-processing machine by applying the thermoplastic resin composition, the residue of the purging resin composition can be easily detected. No excess of a resin to discharge the purging agent is needed and shorter hours are needed for the entire cleaning process. The defects of moldings are reduced, which could happen if the manufacturing of the moldings started before the purging agents were thoroughly discharged.

### Brief description of figures

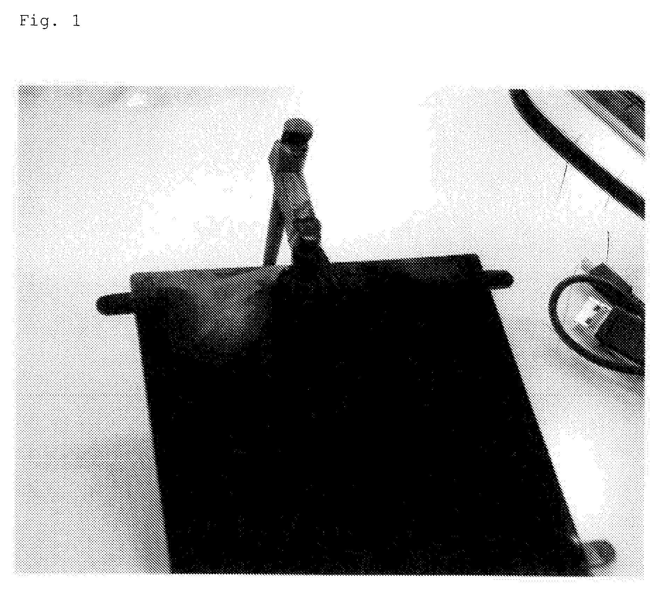

[Fig.1] A photograph to illustrate the way of checking the residue of the resin composition in example 1.

### Detail description of the invention

Any thermoplastic resin hereto fore known as plastics for cleaning plastics-processing machines can be used as a thermoplastic resin contained in the resin composition of the present invention. Styrene-based resin; polycarbonate-based resin; olefin-based resin such as polypropylene, polyphenylenesulfide-based resin, polymethacrylate, polyamide-based resin, polyester-based resin, polysulfone-based resin (PSF), polyacetal, polyether-ether-ketone (PEEK), polyetherimide(PEI), polyethersulfone (PES), polyamide-imide(PAI), polyimide (PI) can be cited as examples.

The tracer substance contained in the thermoplastic resin composition of the present invention fluoresces. The tracer substance functions as an indicator for checking the residue of the thermoplastic composition in the plastics-processing machines after cleaning plastics-processing machines.

The tracer substance requires fluorescing; fluorescent whitener, fluorescent pigment, and fluorescent dye can be cited as an example.

As fluorescent whitener, benzoxazoyl derivatives, cumarin derivatives, styrene-biphenyl derivatives, pyrazolone derivatives can be cited. The fluorescent whiteners for plastics including Hostalux manufactured by Clariant Ltd. are the most preferable among these.

As fluorescent pigments, heretofore known organic or inorganic pigments can be cited, including DIGRO LFY series manufactured by DIGRO GmbH, Sinloihi Color FZ2000 series manufactured by Sinloihi Co., Ltd. specifically.

As fluorescent dye, heretofore known substances such as rhodamine, cumarin, naphthalimide, benzoxantene, acrydine, or fluorescein can be cited.

The thermoplastic resin composition of the present invention can, if necessary, additionally contain any ingredients contained in the heretofore known purging agents, for example, organic fibers, inorganic fibers, surfactants, organic phosphorous compounds, polyalcohols, and metal soaps.

As organic fibers, cellulose fibers, nylon fibers, polyester fibers or acrylic fibers can be cited.

As inorganic fillers, a material selected from glass fibers; metal fibers; liquid slag, iron and steel slag or crushed slag of these; artificial mineral fibers; wollastonites can be cited, which are fibers and non-fibers (powders, granules, smashed pieces) in shape.

The thermoplastic resin composition of the present invention is manufactured by being kneaded with an extruder or in a molten state with heating rolls or Banbury mixer, after pre-blending the said each component with a mixer such as Henschel mixer, Tumbling blender or a kneader.

The thermoplastic resin composition of the present invention can be directly used as a purging agent, and it can also be used as a master batch as well.

The content of the tracer may be in a range with which the fluorescence can be detected in the cleaning process. The tracer substance should preferably be contained in higher concentration when the thermoplastic resin composition is used as a master batch, because the resin composition is to be diluted with not-tracer-including thermoplastic compositions.

### <Method of cleaning plastics-processing machines>

Now the invention of a method of cleaning plastics-processing machines with the thermoplastic resin composition of the present invention is illustrated in line with each process. The method of cleaning plastics-processing machines of the present invention includes the cleaning process with the resin composition for cleaning and the process of discharging the said resin composition.

First, plastics-processing machines that have just processed plastics are cleaned with the resin composition of the present invention. Any heretofore known cleaning process can be applied.

The content of the tracer in the composition, used in this process, requires being in a range with which the residue of the resin composition can be checked, it is preferably 0.005 % by mass or more of the composition, in a view of preventing the tracer itself remaining overly, it is more preferably 0.01 - 2.0 % by mass, and more preferably 0.02 - 1.0 % by mass.

In the next process, the thermoplastic resin composition remaining in plastics-processing machine is discharged by extruding the following resins after cleaning the said processing machine. In the extruding and discharging process, after moldings of the subsequent plastics, for example, extruded sheet in shape, is molded, it is checked whether the surface of the molding fluoresces.

The way to check the fluorescence depends on the type of tracer substance, radiation of UV having wavelength between 350 and 400 nm can be applied when fluorescent whiteners for plastics are used. If fluorescent is detected when UV having wavelength between 350 and 400 nm is radiated, then the cleaning with the subsequent resins is repeated until no fluorescent is detected.

Applying the cleaning method of the present invention, the residue of purging agents is easily detected, no excess of resins to discharge the purging agent is needed and shorter hours are needed for the cleaning process.

### Examples

### Example 1

1 kg of ABS resin were molded with an injection molding machine, Mitsubishi Heavy Industries' "Mitsubishi Injection molding machine 265/100MSII" at the molding temperature of 230°C. Then the resin composition, containing the tracer substance, shown in Table 1 as example 1 was put through.

Then black-colored POM, Duracon M90-44 manufactured by Polyplastics Co., was put into the injection machine and molded into 100 x 100 x 3 mm pieces.

In the first and the second molded plates, the residue of the resin composition of example 1 was detected with naked eyes, and in the third plate, no contamination was detected with naked eyes. However, the plate partially fluoresced (see Fig.1) when UV light having wavelength 365 nmwas radiated, the contamination of the resin composition of example 1, that is, the resin composition of example 1 remaining in the injection molding machine, was confirmed. Then on the tenth moldings no fluorescent was detected, it was judged that no resin composition of example 1 remained in the injection molding machine.

Then the injection molding machine was took apart, inner surface of the cylinder and the surface of the screw were observed with naked eyes, and neither residue of ABS resin nor the resin composition of example 1 were detected.

### Example 2

A test was carried out in the same way of Example 1 with the resin composition containing tracer substance shown in Table 1 as Example 2. As a result, on the fifteenth moldings no fluorescent was detected, it was judged that no resin composition of example 2 remained in the injection molding machine.

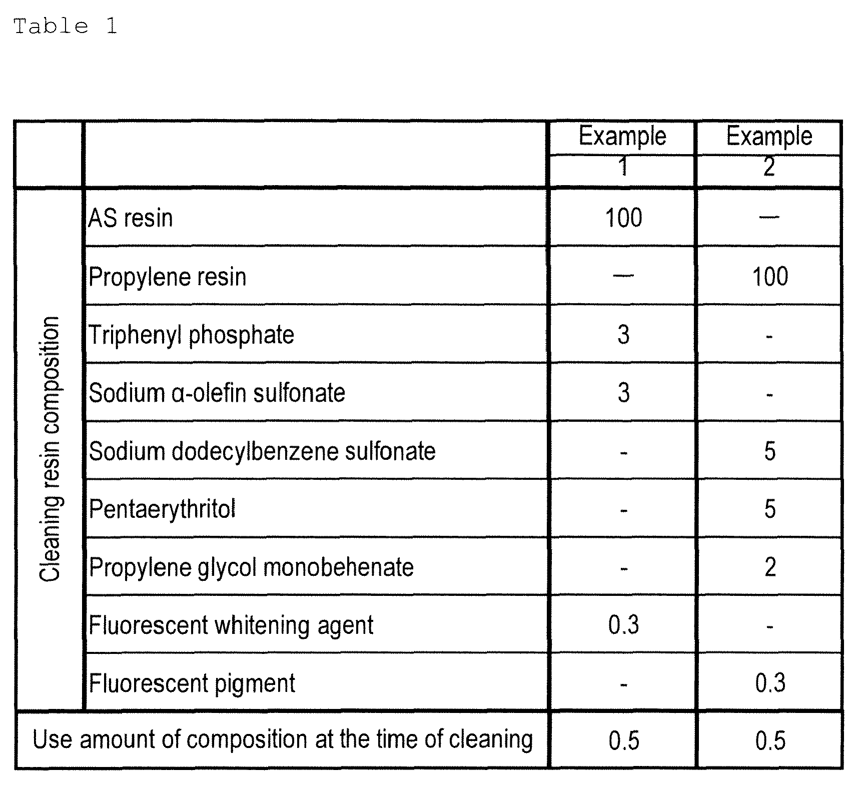

The unit of figures in Table 1 is kg.
AS resin: CEVIAN N 080SF, manufactured by Daicel Polymer Co., Ltd.
Propylene resin: Prime Polypro F-300SP (melt flow rate 3 g/10 min, (230°C/2.16 kg)), manufactured by Prime Polymer Co., Ltd. Fluorescent pigment: DIGRO LFY manufactured by AR BROWN CO., LTD.
Fluorescent whitening agent: Hostalux KS1 manufactured by Clariant Co., Ltd.

## Claims

1. A resin composition for cleaning a plastics-processing machine, comprising a thermoplastic resin and a tracer substance, wherein the said tracer substance fluoresces and functions as an indicator of checking a residue of the thermoplastic resin in the plastics-processing machine after cleaning the plastics-processing machines.

2. The resin composition as claimed in claim 1, wherein the saidtracer substance is selected fromfluorescentwhiteners, fluorescent pigments and fluorescent dyes.

3. The resin composition as claimed in claim 1 or 2, wherein the said tracer substance is a fluorescent whitener for plastics.

4. A method of cleaning a plastics-processing machine by applying the thermoplastic resin composition claimed in any one of claims 1 to 3, including two processes : a process of cleaning the plastics-processing machine with the said resin composition after processing a resin and a process of discharging the said resin composition remaining in the processing machine after the cleaning by extruding a subsequent resin, wherein the residue of the thermoplastic resin composition in a molding of the subsequent resin can be detected in the discharging process by checking fluorescence on the surface of the molding.

5. The method of cleaning a plastics-processing machine as claimed in claim 4, wherein the said checking of fluorescence is carried out with radiation of UV having wavelengths between 350 - 400 nm.

6. The method of cleaning a plastics-processing machine as claimed in claim 4 and 5, wherein the content of the tracer substance in the said resin composition used in the process of cleaning plastics-processing machine after processing resins is 0.005 % by mass or more.
